# EUROPEAN PATENT APPLICATION

(11) **EP 4 787 091 A1**
(43) Date of publication of application: **05.08.2026**
(21) Application number: 24871033.7
(22) Date of filing: 27.09.2024
(51) Int. Cl.: G05B 19/042, G06F 3/038

(54) **VEHICLE CONTROL**

(30) Priority: 28.09.2023 CN 202311278905
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: DAI, Lianchao, Hangzhou, Zhejiang 310051 (CN); WANG, Wei, Hangzhou, Zhejiang 310051 (CN)
(74) Representative: Michalski Hüttermann & Partner mbB
(86) International application number: PCT/CN2024/121978
(87) International publication number: WO 2025/067498

(57) **Abstract**

Provided are a method, an apparatus, and a system for controlling a vehicle (301). The method is applied to a quick-access function terminal (100, 303) placed inside the vehicle (301) and equipped with a manual operation component (102), and includes: in response to detecting a target quick operation performed on the manual operation component (102), determining (401) a target action identifier corresponding to the target quick operation, where the quick-access function terminal (100, 303) establishes a first wireless connection with the vehicle (31); and sending (402) the target action identifier to the vehicle (301) through the first wireless connection, so that the vehicle (301) controls a target functional device equipped in the vehicle to perform a target action represented by the target action identifier. In this way, a user, such as a driver, can implement quick control of a target function by performing a one-touch operation on the manual operation component (102) of the quick-access function terminal (100, 303), which helps to improve driving and riding experience of the user.

## Description

### TECHNICAL FIELD

The present disclosure relates to the field of vehicles, and in particular to vehicle control.

### BACKGROUND

With continuous improvement of intelligent levels of vehicles, especially new energy vehicles, vehicle manufacturers are increasingly pursuing simplification of consoles. Therefore, physical buttons on the vehicles designed and produced currently are gradually reduced, so that control modes of the vehicles are gradually transitioning from button-based "hard control" to screen-based "soft control".

Taking a center console display as an example, the center console display can integrate control of all vehicle functions together, which reduces the number of physical buttons on a center console of the vehicle, and in turn enables control of more vehicle functions through the center console display. However, when the soft control is implemented through the center console display, functional entry points are typically buried deep within a menu hierarchy. This makes operation steps too complex, and makes it inconvenient for a vehicle occupant (such as a driver) to perform a quick operation. In particular, performing such complex operation steps while the vehicle is in motion may even bring safety hazards.

In addition, there are a considerable number of both button-controlled vehicles and screen-controlled vehicles in the current market. However, users' original habits of using button-based operations are often difficult to change quickly, making them unaccustomed to or reluctant to use screen-based operations. As a result, the above transition trend causes troubles to such users to a certain extent, resulting in poor driving and riding experience.

### SUMMARY

In view of this, the present disclosure provides a method, apparatus, and system for controlling a vehicle, to resolve deficiencies in the related art.

Specifically, the present disclosure is implemented by the following technical solutions.

According to a first aspect of the present disclosure, there is provided a method of controlling a vehicle, applied to a control module in a quick-access function terminal placed inside the vehicle and equipped with a manual operation component, the quick-access function terminal establishing a first wireless connection with the vehicle, the method including:
in response to detecting a target quick operation performed on the manual operation component, determining a target action identifier corresponding to the target quick operation; and
sending the target action identifier to the vehicle through the first wireless connection, so that the vehicle controls a target functional device equipped in the vehicle to perform a target action represented by the target action identifier.

Optionally, determining the target action identifier corresponding to the target quick operation includes:
determining target operation information of the target quick operation; and
querying an action configuration table locally maintained by the quick-access function terminal for the target action identifier corresponding to the target operation information, the action configuration table being configured for recording a correspondence between operation information and an action identifier.

Optionally, the method further includes:
receiving an action identifier corresponding to an in-vehicle infotainment function selected by a user; and
in a configuration mode, in response to detecting a configuration operation performed on the manual operation component, recording, in the action configuration table, a correspondence between operation information of the configuration operation and the received action identifier.

Optionally, receiving the action identifier corresponding to the in-vehicle infotainment function selected by the user includes:
receiving the action identifier from the vehicle through the first wireless connection; or
in a case where the quick-access function terminal establishes a second wireless connection with an electronic device independent of the vehicle, receiving the action identifier from the electronic device through the second wireless connection;
where an in-vehicle infotainment function corresponding to the received action identifier is selected by the user in an interactive interface provided by the vehicle or the electronic device.

Optionally, in response to detecting the target quick operation performed on the manual operation component, determining the target action identifier corresponding to the target quick operation includes:
determining, in response to detecting one target quick operation performed on the manual operation component, one target action identifier corresponding to the one target quick operation; or
determining, in response to detecting a plurality of consecutive target quick operations performed on the manual operation component, one target action identifier jointly corresponding to the plurality of consecutive target quick operations or target action identifiers respectively corresponding to the plurality of consecutive target quick operations.

Optionally,
determining the target action identifier corresponding to the target quick operation includes: determining a plurality of target action identifiers corresponding to the target quick operation and sequence information of the plurality of target action identifiers, where the plurality of target action identifiers respectively represent at least one target action; and
sending the target action identifier to the vehicle includes: sending the plurality of target action identifiers and the sequence information to the vehicle, or sequentially sending the plurality of target action identifiers to the vehicle according to a sequence indicated by the sequence information, so that the vehicle sequentially controls, according to the sequence information, corresponding target functional devices to perform target actions respectively represented by the plurality of target action identifiers.

Optionally, determining the target action identifier corresponding to the target quick operation includes:
sending a state information acquisition request to the vehicle through the first wireless connection;
receiving vehicle state information returned by the vehicle in response to the state information acquisition request, the vehicle state information being configured for representing a current operating state of the vehicle; and
determining the target action identifier corresponding to the target quick operation according to the vehicle state information.

Optionally, a plurality of quick-access function terminals are placed inside the vehicle, and the plurality of quick-access function terminals form a composite function terminal according to a preset sequence;
and the vehicle is configured for:
in response to receiving target action identifiers from the plurality of quick-access function terminals in the composite function terminal, respectively,
verifying whether the received target action identifiers are the same, and in response to the target action identifiers being the same, controlling a corresponding target functional device to perform a target action represented by the target action identifiers; or
verifying whether a sequence of receiving the target action identifiers is the preset sequence and whether an interval duration between receiving adjacent target action identifiers is not greater than a duration threshold, and in response to the sequence being the preset sequence and the interval duration being not greater than the duration threshold, controlling a corresponding target functional device to perform a target action represented by the target action identifiers.

Optionally, the method further includes:
determining operation level information of the target quick operation; and
sending the operation level information to the vehicle through the first wireless connection, so that the vehicle controls the target functional device to perform the target action according to an execution level indicated by the operation level information.

According to a second aspect of the present disclosure, there is provided a quick-access function terminal, including a control component, and a manual operation component, a communication component, and a power supply component that are connected to the control component; where
the manual operation component is configured to receive a target quick operation performed by a user;
in response to the quick-access function terminal being placed inside a vehicle, the communication component is configured to establish a first wireless connection with the vehicle;
the power supply component is configured to supply power to the control component, the manual operation component, and the communication component; and
the control component is configured to implement the method according to any one of the first aspect.

Optionally, the manual operation component includes at least one of a button, a knob, a lever, or a slider.

Optionally, the quick-access function terminal further includes an information output component configured for outputting operation related information of the control component.

According to a third aspect of the present disclosure, there is provided an apparatus for controlling a vehicle, applied to a quick-access function terminal placed inside the vehicle and equipped with a manual operation component, where the quick-access function terminal establishes a first wireless connection with the vehicle, and the apparatus includes:
an identifier determining unit, configured for, in response to detecting a target quick operation performed on the manual operation component, determining a target action identifier corresponding to the target quick operation; and
an identifier sending unit, configured for sending the target action identifier to the vehicle through the first wireless connection, so that the vehicle controls a target functional device equipped in the vehicle to perform a target action represented by the target action identifier.

According to a fourth aspect of the present disclosure, there is provided a system for controlling a vehicle, including the vehicle and a quick-access function terminal placed inside the vehicle and establishing a first wireless connection with the vehicle, the quick-access function terminal being equipped with a manual operation component, where
the quick-access function terminal is configured to determine, in response to detecting a target quick operation performed on the manual operation component, a target action identifier corresponding to the target quick operation, and send the target action identifier to the vehicle through the first wireless connection; and
the vehicle is configured to control a corresponding target functional device to perform a target action represented by the target action identifier.

According to a fifth aspect of the present disclosure, there is provided a vehicle, where a quick-access function terminal is placed inside the vehicle, a first wireless connection is established between the quick-access function terminal and the vehicle, and the quick-access function terminal is configured to implement the method according to any one of the first aspect.

According to a sixth aspect of the present disclosure, there is provided an electronic device, including:
at least one processor; and
at least one memory for storing processor-executable instructions;
where the at least one processor is configured to perform the executable instructions to implement the steps of the method according to the first aspect.

According to a seventh aspect of the present disclosure, there is provided a computer-readable storage medium, having computer instructions stored thereon, the instructions, when performed by at least one processor, implementing the steps of the method according to the first aspect.

The technical solutions provided by the embodiments of the present disclosure may include the following beneficial effects.

The present disclosure first provides a quick-access function terminal capable of being placed inside a vehicle, the quick-access function terminal including a control component, and a manual operation component, a communication component, and a power supply component that are connected to the control component; where the manual operation component is configured to receive a target quick operation performed by a user; the communication component is configured to establish a first wireless connection with the vehicle; and the power supply component is configured to supply power to the control component, the manual operation component, and the communication component.

Based on the quick-access function terminal, the present disclosure further provides a method of controlling a vehicle, applied to the quick-access function terminal, the quick-access function terminal is placed inside the vehicle and establishes a first wireless connection with the vehicle, and the quick-access function terminal can determine, in response to detecting a target quick operation performed on the manual operation component, a target action identifier corresponding to the target quick operation; and send the target action identifier to the vehicle through the first wireless connection, so that the vehicle controls a target functional device equipped in the vehicle to perform a target action represented by the target action identifier.

In the embodiments of the present disclosure, the quick-access function terminal may sense the target quick operation performed by the user through the manual operation component equipped therein, and instruct the vehicle to control the target functional device equipped in the vehicle to perform the target action by sending the target action identifier corresponding to the target quick operation to the vehicle. It can be understood that when the user needs the vehicle to implement a target function, the user can perform a target quick operation corresponding to the target function on the manual operation component in the quick-access function terminal, so as to trigger the vehicle to perform a target action through the quick-access function terminal to implement the target function.

Different from "soft control" implemented by using a display equipped in the vehicle (for example, a center console display), the manual operation component equipped on the quick-access function terminal is a physical component. The user may perform the target quick operation corresponding to the target function directly on the manual operation component, to control the target functional device in the vehicle to perform the corresponding target action to implement the target function. For example, the user may directly press a button to raise or lower a window, turn a knob to control a temperature of an air conditioner or a volume of a radio, etc. It is apparent that, for a vehicle with related functions integrated in a center console display, by placing the quick-access function terminal inside the vehicle, the user (such as a driver) can implement quick control of the target function by performing a one-touch operation on the manual operation component of the quick-access function terminal. Compared with controlling the target function in the foregoing "soft control" manner on the center console display, the quick-access function terminal described in this solution enables the user to implement "hard control" of the target function by using the manual operation component. In this way, the manual operation component can simulate a convenient and quick control effect of an original physical component of the vehicle, better conform to an operation habit of the user, and effectively avoid troubles to the user in terms of operation mode, thereby helping to improve driving and riding experience of the user.

### BRIEF DESCRIPTION OF DRAWINGS

In order to more clearly illustrate the technical solutions of the present disclosure, the drawings to be used in the description of the embodiments or the related art will be briefly described below. It is apparent that, the drawings in the following description are only some embodiments of the present disclosure, and those of ordinary skill in the art can obtain other drawings according to these drawings without creative efforts.
FIG. 1 is a schematic diagram illustrating a quick-access function terminal according to an embodiment of the present disclosure.
FIG. 2 is a schematic structural diagram illustrating one or more quick-access function terminals according to an embodiment of the present disclosure.
FIG. 3 is a schematic architectural diagram illustrating a vehicle control system according to an embodiment of the present disclosure.
FIG. 4 is a flowchart illustrating a vehicle control method according to an embodiment of the present disclosure.
FIG. 5 is a block diagram illustrating a vehicle control apparatus according to an embodiment of the present disclosure.

### DETAILED DESCRIPTION

Reference will now be made in detail to exemplary embodiments, examples of which are illustrated in the accompanying drawings. When the following description refers to the drawings, the same reference numerals in different drawings indicate the same or similar elements, unless otherwise specified. Implementations set forth in the following exemplary embodiments do not represent all implementations consistent with the present disclosure. Rather, the embodiments are merely examples of apparatuses and methods consistent with some aspects of the present disclosure.

Terminology used herein is for the purpose of describing particular embodiments only, and is not intended to be limiting of the present disclosure. The singular forms "a", "said", and "the" used in the present disclosure and the appended claims are intended to include plural forms as well, unless the context clearly indicates otherwise. It should also be understood that the term "and/or" as used herein refers to and encompasses any or all possible combinations of one or more of the associated listed items.

It should be understood that although the terms first, second, third, etc. may be used in the present disclosure to describe various information, the information should not be limited by these terms. These terms are only used to distinguish the same type of information from each other. For example, without departing from the scope of the present disclosure, first information may also be referred to as second information, and similarly, second information may also be referred to as first information. Depending on the context, the word "if" as used herein may be interpreted as "upon" or "when" or "in response to determining".

In view of the technical problems in the related art, the present disclosure discloses a quick-access function terminal and a vehicle control scheme implemented by the quick-access function terminal. The quick-access function terminal is equipped with a manual operation component. Based on this scheme, the user only needs to perform a one-touch operation on the manual operation component to implement quick control of the target function of the vehicle, thereby realizing "hard control" of the target function without performing complex "soft control" on the center console display of the vehicle itself, which helps to simplify the operation mode of the user, improve the operational convenience of the user, and also better conform to the operation habits of the user.

The embodiments of the quick-access function terminal and the vehicle control method of the present disclosure will be described in detail below with reference to the accompanying drawings.

The present disclosure provides a quick-access function terminal, including: a control component; and a manual operation component, a communication component, and a power supply component that are connected to the control component, where
the manual operation component is configured to receive a target quick operation performed by a user;
when the quick-access function terminal is placed inside a vehicle, the communication component establishes a first wireless connection with the vehicle;
the power supply component is configured to supply power to the control component, the manual operation component, and the communication component; and
the quick-access function terminal is configured to implement the method according to any one of the following embodiments.

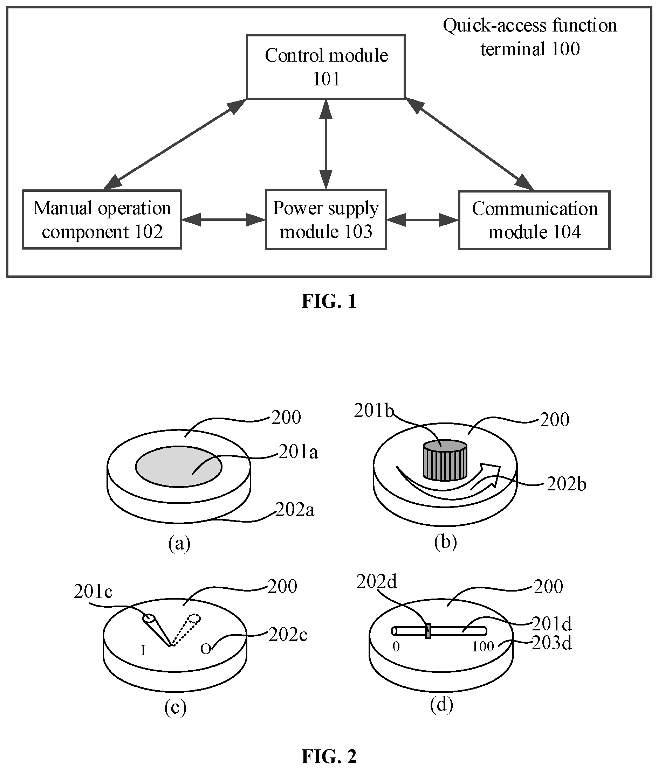

FIG. 1 is a schematic diagram illustrating a quick-access function terminal according to an embodiment of the present disclosure. As shown in FIG. 1, the quick-access function terminal 100 includes at least one control module 101, at least one manual operation component 102, at least one power supply module 103, and at least one communication module 104. The control module 101 is connected to the manual operation component 102, the power supply module 103, and the communication module 104, and is configured to control an overall operation of the quick-access function terminal 100. The power supply module 103 is connected to the control module 101, the manual operation component 102, and the communication module 104, and is configured to supply power to these modules to ensure normal operation of these modules.

The quick-access function terminal 100 may be placed inside a vehicle, and establish a first wireless connection with the vehicle through the communication module 104, so as to subsequently interact with the vehicle through the first wireless connection under the control of the control module 101, such as receiving a configuration instruction from the vehicle, sending a target action identifier to the vehicle, etc. Correspondingly, the vehicle according to the present disclosure itself only needs to be equipped with a corresponding communication module (such as a Bluetooth signal transceiver) to establish the first wireless connection with the communication module 104 in the quick-access function terminal 100. The present disclosure does not limit product related information of the vehicle, such as a brand or a model. Consequently, the quick-access function terminal according to the present disclosure is not limited to being used with vehicles of a certain brand, but is a universal terminal. The first wireless connection may include a Bluetooth connection, a near field communication (NFC) connection, or the like. Alternatively, the first wireless connection may also include a Wi-Fi connection. In this case, the vehicle and the quick-access function terminal 100 may be within a same Wi-Fi signal range, that is, may be connected to a same Wi-Fi signal source. The Wi-Fi signal source may be provided by the vehicle or an electronic device (such as a mobile phone or a computer) carried by a vehicle occupant. However, the first wireless connection may adopt other forms of wireless signals, which is not limited by the present disclosure.

In an embodiment, the manual operation component equipped on the quick-access function terminal may include a button, a knob, a lever, and/or a slider. In other words, any quick-access function terminal may be equipped with at least one of the button, the knob, the lever, or the slider as the manual operation component, so as to receive the target quick operation performed by the user (such as a driver or other vehicle occupants). In addition to the above exemplary components, another type of physical device may be used as the manual operation component according to actual requirements, which will not be described in further detail herein.

FIG. 2 is a schematic structural diagram illustrating one or more quick-access function terminals according to an embodiment of the present disclosure. As shown in (a) of FIG. 2, the quick-access function terminal 200 is equipped with a button 201a, and the user may perform a press operation on the button, such as single-click, double-click, triple-click, and so on. As shown in (b) of FIG. 2, the quick-access function terminal 200 is equipped with a knob 201b, and the user may perform a rotation operation on the knob, such as rotating the knob from one end to the other end, or rotating the knob from a certain position to another position. In order for the user to know a degree of the rotation, the quick-access function terminal 200 may also be provided with a degree-indicating marking at an appropriate position on a surface thereof, such as a curved arrow 202b shown in (b). As shown in (c) of FIG. 2, the quick-access function terminal 200 is equipped with a lever 201c, and the user may perform a toggle operation on the lever, for example, toggling the lever from position "I" to position "O", or toggling the lever from position "O" to position "I". State markings 202c (for example, "O" and "I") may be configured to indicate positions and states that the lever can be toggled. As shown in (d) of FIG. 2, the quick-access function terminal 200 is equipped with a slider 201d, and the user may perform a push-pull operation on a sliding contact 202d, for example, pushing the sliding contact 202d from one end to the other end, or pulling the sliding contact 202d from a certain position to another position. Position indication information 203d is configured to indicate positions to which the sliding contact 202d can be moved.

Operational positions of the knob, the lever, and the slider in the quick-access function terminal may be smoothly changed, or a plurality of fixed positions may be provided, with the operational positions switched among these fixed positions for user convenience. It should be noted that FIG. 2 is only used to exemplarily show parameters of the quick-access function terminal and the manual operation component equipped thereon, such as type, position, size, and shape, and the target quick operation performed on the manual operation component. The above parameters of the quick-access function terminal may be appropriately adjusted according to the actual situation during the application stage of this scheme, which is not limited by the present disclosure.

In addition, it should be noted that the aforementioned manual operation component, such as a button, knob, lever, or slider is a physical component, which may receive the target quick operation without being powered on. For example, the button may be pressed even in a power-off state, the lever may be toggled even in the power-off state, etc. However, to ensure that the control module 101 accurately senses the target quick operation, an operation sensing device (such as a position detection circuit) may be further integrated into the manual operation component. Therefore, the power supply module 103 shown in FIG. 1 supplies power to the manual operation component 102, which may be considered as supplying power to the operation sensing device integrated in the manual operation component 102. In a power-on state, the operation sensing device, after sensing that the manual operation component is operated, may send a corresponding operation change signal (e.g., an electrical level, a resistance, or the like) to the control module 101, so that the control module 101 detects the target quick operation performed on the manual operation component and performs corresponding processing.

In an embodiment, the quick-access function terminal may further include an information output component (not shown in FIG. 1), which is configured to output operation related information of the quick-access function terminal. The information output component may output the operation related information in any form, such as sound, light, and vibration. For example, the information output component may include an LED, and the control module 101 may control the LED to flash rapidly (that is, quickly and alternately turn on and off) in a configuration mode, and turn off after configuration is completed; or the control module 101 may control the LED to emit green light when power is sufficient, and emit red light when power is insufficient. Alternatively, the information output component may be a buzzer. The control module 101 may control the buzzer to emit a beep sound when the target quick operation is detected. The control module 101 may further control the buzzer to emit beep sounds of different tones and/or different volumes according to different types of the target quick operations detected, so as to provide feedback information related to the target quick operation to the user through the beep sound. Alternatively, the information output component may be a vibration generator (such as an electric motor). The control module 101 may control the vibration generator to vibrate when the target quick operation is detected, which will not be described in further detail herein.

In an embodiment, in order to realize miniaturization of the quick-access function terminal, a power source of the power supply module may be a coin cell battery. In addition, the power source of the power supply module may be a disposable and replaceable battery. In this case, the quick-access function terminal may be provided with a battery cover plate or the like at a position corresponding to the battery to facilitate replacement of the battery. Alternatively, the power source may be a rechargeable battery that can be used repeatedly, in which case the quick-access function terminal may be further provided with a charging interface for the battery so as to charge the battery.

The quick-access function terminal according to the present disclosure may be cooperated with the vehicle to form a vehicle control system. The quick-access function terminal is equipped with the manual operation component, and the quick-access function terminal can be placed inside the vehicle and establish the first wireless connection with the vehicle.

The quick-access function terminal is configured to determine, in response to detecting a target quick operation performed on the manual operation component, a target action identifier corresponding to the target quick operation, and send the target action identifier to the vehicle through the first wireless connection.

The vehicle is configured to control a corresponding target functional device to perform a target action represented by the target action identifier.

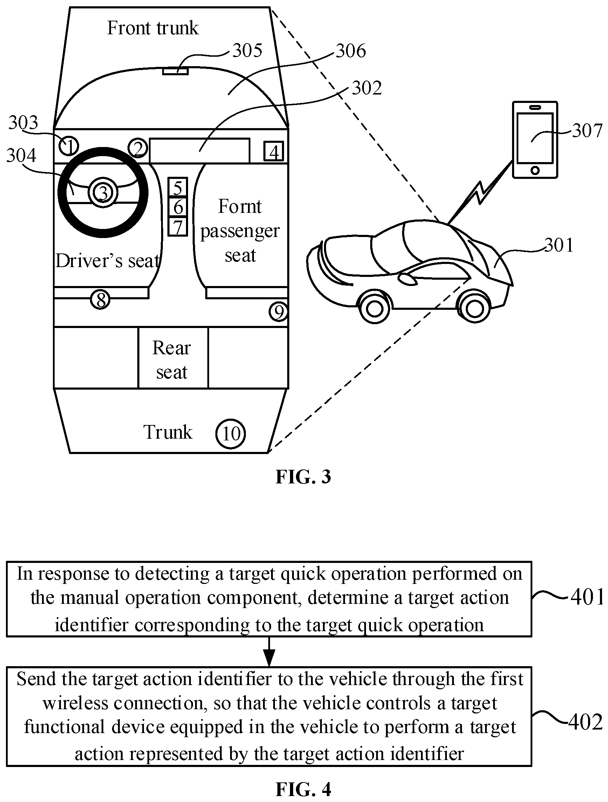

For a specific process in which the quick-access function terminal performs the vehicle control method, reference can be made to descriptions in the following embodiments, which will not be described in further detail herein. The vehicle control system formed by the quick-access function terminal and the vehicle will be first described with reference to FIG. 3.

FIG. 3 is a schematic architectural diagram illustrating a vehicle control system according to an embodiment of the present disclosure. As shown in FIG. 3, the vehicle 301 is equipped with a center console display 302 and at least one functional device (such as an air conditioner, an audio system, a vehicle window, a rearview mirror, a reversing camera, etc., which are not shown in the drawings). The center console display 302 may be connected to an in-vehicle infotainment system and integrated with a control function of the functional device. That is, a user (such as a vehicle occupant) may perform a corresponding touch operation according to the content displayed on the center console display 302, so as to control a corresponding functional device in the vehicle 301 to implement a preset function in a "soft control" manner, such as controlling to adjust the temperature of the air conditioner, controlling the audio system to play the next piece of music, controlling the rearview mirror to rotate, etc. However, the vehicle 301 itself may be equipped with operation components for corresponding functional devices, which is not limited by the present disclosure.

The quick-access function terminal 303 according to the present disclosure may be placed at any position inside the vehicle 301. For example, a quick-access function terminal 1 (hereinafter referred to as terminal 1) is placed on an upper left side of a steering wheel 304, a terminal 2 is placed on an upper right side of the steering wheel 304, a terminal 3 is placed at the center of the steering wheel 304, a terminal 4 is placed on a console to the right front of a front passenger seat, terminals 5 to 7 are sequentially placed on a glove compartment from top to bottom, a terminal 8 is placed behind a driver's seat, a terminal 9 is placed behind the front passenger seat, a terminal 10 is placed in a trunk (e.g., on an inner side wall of the trunk or an inner side of an upper cover of the trunk), etc. However, the quick-access function terminal may be placed at a suitable position on a front windshield 306 or a rearview mirror (or dashcam) 305 above the driver's seat. Moreover, without considering a risk of falling off, the quick-access function terminal may even be completely placed outside the vehicle 301, such as above a hood, above a roof, etc., which will not be described in further detail herein.

It should be noted that any number of quick-access function terminals may be placed inside the vehicle 301. Each of the quick-access function terminals may establish the first wireless connection with the vehicle (not shown in FIG. 3), and control the vehicle to perform the target action according to the vehicle control method described below to implement the corresponding target function. Additionally, the user may place the quick-access function terminal at any suitable position within the vehicle 301, according to the user's personal preference or usage habit, for ease of operation by the user. However, it should be noted that no matter where the quick-access function terminal is placed, the quick-access function terminal should be able to establish the stable first wireless connection with the vehicle 301, so as to perform smooth and stable normal interaction with the vehicle 301. Therefore, power of the communication modules in the quick-access function terminal and the vehicle can be reasonably controlled to ensure that the quick-access function terminal and the vehicle are both within a signal range of each other, thereby ensuring stable connection.

In terms of manners in which the quick-access function terminal is placed inside the vehicle, the quick-access function terminal may be directly placed at a corresponding position inside the vehicle. For example, as shown in FIG. 3, the terminal 1, the terminal 2, and the terminal 4 may be directly placed on the console. Alternatively, the quick-access function terminal may be fixed at a corresponding position inside the vehicle by means of adhesion, magnetic attachment, snap-fit connection, hook & loop, etc. For example, a double-sided adhesive tape may be disposed at the bottom of the terminal 1 (position 202a as shown in (a) of FIG. 2), and the terminal 1 may be adhered onto the console by means of the adhesive tape. A magnet may be disposed at the bottom of the terminal 4, such that the terminal 4 may be attached onto the console by means of magnetic attachment (however, the console is required to be made of a magnetic material such as metal at the attachment position). Snap-fit connectors may be disposed at the bottom or sides of the terminals 8 and 9, such that the terminals 8 and 9 may be connected to the rear of the seats. A hook & loop may be disposed at the bottom of the terminal 10, such that the terminal 10 may be connected to plush fabric lining inside the trunk. It can be seen that the foregoing placement manners are all detachable, so that the user can easily change a placement position of the quick-access function terminal inside the vehicle. However, the quick-access function terminal may also be connected to a corresponding position inside the vehicle in a non-detachable manner, which is not limited by the embodiments of the present disclosure.

In addition to the quick-access function terminal and the vehicle that are connected via the first wireless connection, the vehicle control system may further include an electronic device (for example, a mobile phone 307 as shown in FIG. 3) for use by the user. The electronic device may establish a second wireless connection with the quick-access function terminal, so as to send a to-be-configured action identifier to the quick-access function terminal through the second wireless connection. A specific process can be found in the following embodiments, and will not be described in further detail herein. However, the electronic device may further establish a third wireless connection with the vehicle (as shown in FIG. 3), so as to interact with the vehicle through the third wireless connection, which will not be described in further detail herein. For example, the electronic device may include a mobile phone, a computer, a wearable device (for example, smart glasses or a smart watch), a virtual reality (VR) device, an augmented reality (AR) device, or the like.

FIG. 4 is a flowchart illustrating a vehicle control method according to an embodiment of the present disclosure. The method is applied to the quick-access function terminal equipped with the manual operation component. The quick-access function terminal is placed inside the vehicle and establishes the first wireless connection with the vehicle. The method includes the following steps 402 and 404.

At step 402, in response to detecting the target quick operation performed on the manual operation component, the target action identifier corresponding to the target quick operation is determined.

The quick-access function terminal according to the present disclosure interacts with the vehicle via the first wireless connection. Compared with interacting with the vehicle via an On-Board Diagnostics (OBD) interface, the interaction mode via the wireless connection does not require the quick-access function terminal to be provided with a corresponding interface and does not require connection of a communication cable during use, so that the placement position and usage mode of the quick-access function terminal are more flexible and convenient, which is suitable for application scenarios inside the vehicle with limited space. In summary, an interaction process between the quick-access function terminal and the vehicle in the present disclosure is implemented through the first wireless connection, which will not be repeated below.

As described above, the user may perform a quick operation on the manual operation component of the quick-access function terminal, such as single-clicking or double-clicking a button, rotating a knob, toggling a lever, or pushing and pulling a slider. The target quick operation described in the present disclosure may be any type of quick operation performed by the user on the quick-access function terminal. As shown in FIG. 3, a driver sitting in a driver's seat may single-click a button equipped on the terminal 3, a passenger sitting in a front passenger seat may double-click a button equipped on the terminal 4, a passenger sitting in a rear seat may rotate a knob equipped on the terminal 8, a user outside the vehicle may toggle a lever equipped on the terminal 10 after the trunk is opened, etc.

In an embodiment, the quick-access function terminal may locally maintain an action configuration table configured to record correspondence between operation information and action identifiers. Based on this, when determining the target action identifier corresponding to the target quick operation, the quick-access function terminal may determine the target operation information corresponding to the target quick operation, and then query the action configuration table for the target action identifier corresponding to the target operation information. The operation information of any quick operation may be configured to identify the quick operation; that is, the quick-access function terminal may determine, based on the operation information, a specific type of the target quick operation performed by the user. Specifically, the operation information of the quick operation performed on any manual operation component may include component identification information of the manual operation component and a variation of an electrical parameter corresponding to the quick operation, such as a voltage, a resistance, or a current (for example, the variation is collected by the aforementioned operation sensing device). Based on the above operation information, the quick-access function terminal may accurately determine, by querying the action configuration table, which manual operation component equipped on the terminal is operated by the user and what type of quick operation is performed.

The quick-access function terminal may record the correspondence between the operation information and the action identifiers in the action configuration table in various manners. In an embodiment, the quick-access function terminal may directly acquire the action configuration table and write it into a local storage space to locally configure the action configuration table. For example, the quick-access function terminal may receive the action configuration table from the vehicle through the first wireless connection, or may receive the action configuration table from the electronic device used by the user through the second wireless connection. In this case, the action configuration table may be configured by the user through the center console display (connected to an in-vehicle infotainment system) of the vehicle or through the electronic device.

In another embodiment, the quick-access function terminal may configure, in the action configuration table, an action identifier corresponding to any in-vehicle infotainment function. For example, the quick-access function terminal may receive an action identifier corresponding to a selected in-vehicle infotainment function, where the in-vehicle infotainment function may be implemented by the vehicle by controlling a corresponding functional device to perform an action represented by the action identifier. And, the quick-access function terminal may detect, in a configuration mode, a configuration operation performed on the manual operation component (equipped on the quick-access function terminal), and record, in response to detecting the configuration operation, a correspondence between operation information of the configuration operation and the received action identifier in the action configuration table. When the correspondence between the operation information of the configuration operation and the received action identifier is recorded in the action configuration table, if the operation information does not exist in the table, the foregoing correspondence may be added to the table; and if the operation information already exists in the table, an existing action identifier corresponding to the operation information (that is, an action identifier corresponding to the operation information that has been recorded in the table) may be replaced with the received action identifier, so as to update the correspondence. It should be noted that the quick-access function terminal may enter the configuration mode, and then receive the action identifier in the configuration mode. Alternatively, the quick-access function terminal may enter the configuration mode after receiving a configuration instruction including the action identifier. In other words, there is no inevitable sequence between the foregoing two steps of "receiving the action identifier" and "detecting the configuration operation in the configuration mode", which may be properly set according to an actual situation during implementation of the scheme.

Through the above configuration process, for a functional action corresponding to a certain in-vehicle infotainment function and the configuration operation performed by the user for the in-vehicle infotainment function in a configuration stage, the configuration process for the functional action is completed after the quick-access function terminal correspondingly records the action identifier of the functional action and the operation information of the configuration operation in the action configuration table. Thereafter, if it is detected that the operation information of the target quick operation performed by the user on the manual operation component is recorded in the table, the quick-access function terminal may quickly determine the action identifier corresponding to the target quick operation by querying the table, thereby enabling a rapid response.

It should be noted that, in the action configuration table configured in the foregoing manner, one piece of operation information (which is configured to represent one quick operation) may correspond to one or more action identifiers. In this case, the quick operation corresponding to the operation information may be configured to instruct the vehicle to control a corresponding functional device to perform one or more functional actions respectively corresponding to the action identifiers, to implement one or more corresponding in-vehicle infotainment functions. Alternatively, there may be a plurality of pieces of operation information (where each piece of operation information is configured to represent one quick operation) corresponding to one action identifier in the action configuration table. In this case, quick operations respectively corresponding to these pieces of operation information may be configured to jointly instruct the vehicle to control a corresponding functional device to perform one functional action corresponding to the action identifier, to implement one corresponding in-vehicle infotainment function.

In an embodiment, the quick-access function terminal may enter the configuration mode in various ways. For example, the quick-access function terminal may enter the configuration mode in response to detecting a configuration trigger operation performed on the manual operation component. For example, in the case where the manual operation component is a button, the configuration trigger operation may be pressing and holding the button for 3 seconds, or pressing the button 5 times in succession, etc. Alternatively, the quick-access function terminal may enter the configuration mode in response to receiving a configuration trigger message from the vehicle through the first wireless connection or receiving a configuration trigger message from the electronic device (for example, the mobile phone 307 as shown in FIG. 3) independent of the vehicle through the second wireless connection (that is, a wireless connection established between the quick-access function terminal and the electronic device). It can be seen that the user may trigger, by using the manual operation component, the quick-access function terminal to enter the configuration mode, or the user may interact with the in-vehicle infotainment system or interact with the electronic device, to trigger, by the in-vehicle infotainment system or the electronic device, the quick-access function terminal to enter the configuration mode. The configuration mode may be triggered in various flexible ways.

In an embodiment, the quick-access function terminal may receive the action identifier corresponding to the selected in-vehicle infotainment function in various manners. For example, the quick-access function terminal may receive the action identifier from the vehicle through the first wireless connection. Alternatively, when the quick-access function terminal establishes the second wireless connection with the electronic device independent of the vehicle, the quick-access function terminal may receive the action identifier from the electronic device through the second wireless connection. The in-vehicle infotainment function corresponding to the received action identifier may be selected by the user in an interactive interface provided by the vehicle or the electronic device. For example, the user may select a to-be-configured in-vehicle infotainment function in an interactive interface displayed by the in-vehicle infotainment system via the center console display, or select the to-be-configured in-vehicle infotainment function in an interactive interface displayed on (a screen of) the mobile phone. The selected in-vehicle infotainment function may include window raising/lowering, air conditioner on/off and temperature adjustment, audio volume control, music selection function (previous track, next track, etc.), or the like.

In addition, the quick-access function terminal may further delete, in response to receiving an identifier deletion instruction, at least one action identifier indicated by the identifier deletion instruction from the action configuration table. If the identifier deletion instruction is received in the configuration mode, at least one action identifier indicated by the identifier deletion instruction may be directly deleted. Alternatively, if the identifier deletion instruction is received in the non-configuration mode, the quick-access function terminal may enter the configuration mode, and then delete at least one action identifier indicated by the identifier deletion instruction in the configuration mode.

In an embodiment, the quick-access function terminal may determine, in response to detecting one target quick operation performed on the manual operation component, one target action identifier corresponding to the one target quick operation. Alternatively, the quick-access function terminal may determine, in response to detecting a plurality of consecutive target quick operations performed on the manual operation component, one target action identifier jointly corresponding to the plurality of consecutive target quick operations, or a target action identifier corresponding to each of the plurality of consecutive target quick operations. In this manner, the user may control the target functional device equipped in the vehicle to perform one corresponding target action by implementing one target quick operation. Alternatively, the user may control the target functional device equipped in the vehicle to perform one corresponding target action by implementing a plurality of consecutive target quick operations. In this way, the quick-access function terminal can flexibly configure the correspondences between the target quick operations and the target actions, so as to accommodate diversified operation requirements and operation habits of users.

In an embodiment, the vehicle may be in different operating states at different times, such as a power-off state, a powered-on non-driving state, a low-speed driving state, a high-speed driving state, etc. Further, in the low-speed driving state and the high-speed driving state, the vehicle may also be in sub-states such as a sport mode, a normal mode, and a comfort mode. In this regard, when the vehicle is in different operating states, the user may have a need to implement a certain quick operation to achieve different in-vehicle infotainment functions. In other words, the user may expect that, after the user implements a certain quick operation at any time, the vehicle may achieve an in-vehicle infotainment function matching the current operating state.

In this regard, when determining the target action identifier corresponding to the target quick operation, the quick-access function terminal may send a state information acquisition request to the vehicle through the first wireless connection, and receive vehicle state information returned by the vehicle in response to the request, where the vehicle state information may be configured to represent the current operating state of the vehicle. And then, the target action identifier corresponding to the target quick operation may be determined according to the vehicle state information, thereby ensuring that the determined target action identifier matches the current operating state of the vehicle.

For example, in the scenario as shown in FIG. 3, after the user single-clicks the button equipped on the terminal 3, the terminal 3 may obtain the vehicle state information at the current time from the vehicle, where the vehicle state information may reflect the operating state of the vehicle at the current time. If the vehicle state information indicates that the vehicle is currently in a powered-on and non-driving state and is not parked, the quick-access function terminal may determine an action identifier corresponding to a parking action as the target action identifier, so that the vehicle controls, according to the identifier, a parking motor to start to implement parking of the vehicle. If the vehicle state information indicates that the vehicle is currently in a low-speed driving state, the air conditioner is off, and the interior temperature of the vehicle is below 15°C, the quick-access function terminal may determine an action identifier corresponding to an action of starting the air conditioner as the target action identifier, so that the vehicle controls, according to the identifier, the air conditioner to start to increase the interior temperature of the vehicle. If the vehicle state information indicates that the vehicle is currently in a high-speed driving state and a vehicle window is opened, the quick-access function terminal may determine an action identifier corresponding to an action of closing the vehicle window as the target action identifier, so that the vehicle starts a window motor according to the identifier to close the vehicle window. It can be seen that, in different operating states of the vehicle, the user can control the vehicle to achieve different target functions by performing a single-click operation on the terminal 1, thereby helping to simplify user operations and improving operation convenience and automation.

At step 404, the target action identifier is sent to the vehicle through the first wireless connection, so that the vehicle controls the target functional device equipped in the vehicle to perform the target action represented by the target action identifier.

It may be understood that, after the vehicle controls the target functional device to perform the target action, the corresponding target function may be implemented, for example, toggling a lever to raise or lower a vehicle window, single-clicking a button to turn on an air conditioner, or rotating a knob to increase or decrease a temperature of the air conditioner. For simplicity of description, the expression "the vehicle controls the target functional device equipped in the vehicle to perform the target action" will be briefly described below as "the vehicle performs the target action".

In the embodiments of the present disclosure, the quick-access function terminal implements the foregoing vehicle control method through its own processing logic. That is, the quick-access function terminal locally determines the target action identifier corresponding to the target action for implementing the target function, and directly sends the target action identifier to the vehicle, so that the vehicle directly controls the target functional device to perform the target action according to the target action identifier. In fact, in the embodiments of the present disclosure, the target action identifier sent from the quick-access function terminal to the vehicle essentially serves as an action trigger instruction, which is configured to trigger the vehicle to start controlling the target functional device to perform the target action. In other words, the quick-access function terminal "sending the target action identifier to the vehicle through the first wireless connection" in step 404 may be understood as "sending an action trigger instruction carrying the target action identifier to the vehicle through the first wireless connection", so that the vehicle may control the target functional device to perform the target action directly in response to the action trigger instruction without complex judgment, analysis or processing, as specifically described herein. It can be seen that the target action identifier determined by the quick-access function terminal can directly instruct the vehicle to control the target functional device to perform the target action, so that the vehicle does not need to maintain identification information of the quick-access function terminal such as an address, nor does it need to perform complex judgment, analysis or processing, which significantly simplifies a processing logic of the vehicle. Moreover, the quick-access function terminal only needs to send the target action identifier to the vehicle, which effectively reduces the amount of interaction data between the vehicle and the quick-access function terminal, and helps to achieve a high transmission success rate in wireless connection scenarios.

In an embodiment, one target quick operation or a plurality of consecutive target quick operations may correspond to a plurality of target action identifiers, where each target action identifier represents one or more target actions, which may need to be performed in sequence. In this case, when determining the target action identifier corresponding to the target quick operation, the quick-access function terminal may determine a plurality of target action identifiers corresponding to the target quick operation and sequence information of the plurality of target action identifiers. Further, when sending the plurality of target action identifiers to the vehicle, the quick-access function terminal may send the plurality of target action identifiers together with the sequence information to the vehicle, or the quick-access function terminal may send the plurality of target action identifiers to the vehicle sequentially according to a sequence indicated by the sequence information, so that the vehicle sequentially controls, according to the sequence indicated by the sequence information, corresponding target functional devices to perform target actions respectively represented by the plurality of target action identifiers. For example, after the plurality of target action identifiers together with the sequence information are sent to the vehicle, the vehicle may determine, according to the sequence information, an execution sequence of the target actions respectively represented by the plurality of target action identifiers, and then sequentially perform the target actions according to the execution sequence. For another example, when the plurality of target action identifiers are sent to the vehicle sequentially according to the sequence indicated by the sequence information, the vehicle may sequentially perform corresponding target actions according to a receiving sequence of the target action identifiers, where the receiving sequence is the sequence indicated by the sequence information. For example, upon receiving one target action identifier, the vehicle may immediately perform the target action corresponding to that target action identifier, or the vehicle may wait until all target action identifiers have been received, and then sequentially perform the target actions respectively corresponding to the target action identifiers according to the receiving sequence.

In an embodiment, since a single quick-access function terminal generally has a relatively simple operation mode, in order to implement more complex control, a plurality of quick-access function terminals may be used to jointly control the vehicle to implement a certain target function. For example, the quick-access function terminal (which may be any quick-access function terminal inside the vehicle, e.g., the terminal 5 as shown in FIG. 3) and one or more other quick-access function terminals (which may be any other quick-access function terminals inside the vehicle, e.g., the terminals 6 and 7 as shown in FIG. 3) constitute a composite function terminal according to a preset sequence. Similar to the aforementioned quick-access function terminal, other quick-access function terminals are also equipped with manual operation components, and other quick-access function terminals are also placed inside the vehicle and establish the first wireless connection with the vehicle. For example, the quick-access function terminal may be any quick-access function terminal inside the vehicle, for example, the terminal 5 as shown in FIG. 3, and other quick-access function terminals may be any other quick-access function terminals inside the vehicle, for example, the terminals 6 and 7 as shown in FIG. 3. In other words, the terminals 5 to 7 may form a composite function terminal.

The target action identifier sent from the quick-access function terminal to the vehicle may be configured to instruct the vehicle to verify, in response to receiving target action identifiers separately from quick-access function terminals in the composite function terminal, whether the received target action identifiers are the same, and control, in the case that the target action identifiers are the same, a corresponding target functional device (that is, a functional device indicated by the same target action identifier) to perform a target action represented by the target action identifier. Alternatively, the target action identifier may be configured to instruct the vehicle to verify whether a sequence of receiving the target action identifiers is the preset sequence and whether an interval duration between receiving adjacent target action identifiers is not greater than a duration threshold, and in the case that the sequence is the preset sequence and the interval duration is not greater than the duration threshold, control a corresponding target functional device to perform the target action represented by the target action identifiers.

In this manner, quick-access function terminals constituting the composite function terminal may respectively detect the target quick operations performed by the user on the corresponding manual operation components and determine the corresponding target action identifiers, and then respectively send the target action identifiers determined by themselves to the vehicle. And then the vehicle verifies whether the received target action identifiers are the same, and performs the target action represented by the target action identifiers in the case where the received target action identifiers are the same, or, the vehicle verifies whether the receiving sequence and the interval duration of the target action identifiers satisfy a condition (that is, whether the sequence of receiving the target action identifiers is the preset sequence and whether the interval duration between receiving adjacent target action identifiers is not greater than the duration threshold), and further performs the target action represented by the target action identifiers if the condition is satisfied. By performing the target action, the vehicle can implement the corresponding target function. It can be understood that successful implementation of this embodiment requires cooperation from the vehicle, that is, the vehicle needs to perform corresponding logical judgment on each of the received target action identifiers, and determine whether to perform the target action according to a judgment result.

In an embodiment, in addition to determining the target action identifier, the quick-access function terminal may determine operation level information of the target quick operation, and send the operation level information to the vehicle through the first wireless connection, so that the vehicle controls the target functional device to perform the target action according to an execution level indicated by the operation level information. Still taking FIG. 3 as an example, when the user rotates a knob equipped on the terminal 1 to control the temperature of the air conditioner or the volume of the radio, the terminal 1 may determine a corresponding angle after rotation in response to a detected rotation operation, and control the temperature of the air conditioner or the volume of the radio according to a preset ratio corresponding to the angle. Assuming that a rotation stroke of the knob is 100°, if the angle after rotation is 50°, the temperature of the air conditioner should be adjusted to an intermediate temperature. For example, if a temperature adjustable range of the air conditioner is [20°C, 28°C], the temperature of the air conditioner should be adjusted to 24°C. The volume of the radio should be adjusted to an intermediate volume, such as 50% of a maximum volume. However, a specific adjustment level may be positively or negatively correlated with the angle after rotation, so that the user can accurately control magnitude of the target action, thereby achieving more accurate control of the in-vehicle infotainment function.

In the embodiments of the present disclosure, the quick-access function terminal may sense the target quick operation performed by the user through the manual operation component equipped on itself, and instruct the vehicle to control the target functional device equipped in itself to perform the target action by sending the target action identifier corresponding to the target quick operation to the vehicle. It can be understood that when the user needs the vehicle to implement the target function, the user can perform the target quick operation corresponding to the target function on the manual operation component in the quick-access function terminal, so as to trigger the vehicle to perform the target action through the quick-access function terminal to implement the target function.

Different from "soft control" implemented by using a display equipped in the vehicle (for example, a center console display), the manual operation component equipped on the quick-access function terminal is a physical component. The user may perform the target quick operation corresponding to the target function directly on the manual operation component, to control the target functional device in the vehicle to perform the corresponding target action to implement the target function. For example, the user may directly press a button to raise or lower a window, turn a knob to control a temperature of an air conditioner or a volume of a radio, etc. It is apparent that, for a vehicle with related functions integrated in a center console display, by placing the quick-access function terminal inside the vehicle, the user (such as a driver) can implement quick control of the target function by performing a one-touch operation on the manual operation component of the quick-access function terminal. Compared with controlling the target function in the foregoing "soft control" manner on the center console display, the quick-access function terminal described in this scheme enables the user to implement "hard control" of the target function by using the manual operation component. In this way, the manual operation component can simulate a convenient and quick control effect of an original physical component of the vehicle, better conform to an operation habit of the user, and effectively avoid troubles to the user in terms of operation mode, thereby helping to improve driving and riding experience of the user.

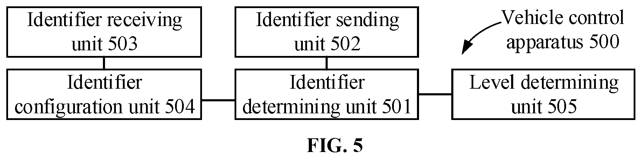

FIG. 5 is a block diagram illustrating a vehicle control apparatus 500 according to an embodiment of the present disclosure. Referring to FIG. 5, the apparatus 500 may be applied to any quick-access function terminal as shown in FIG. 1 to implement the technical solutions of the present disclosure. The apparatus 500 is applied to a control module in the quick-access function terminal placed inside the vehicle and equipped with a manual operation component. The quick-access function terminal establishes a first wireless connection with the vehicle, and the apparatus 500 includes an identifier determining unit 501 and an identifier sending unit 502.

The identifier determining unit 501 is configured for determining, in response to detecting a target quick operation performed on the manual operation component, a target action identifier corresponding to the target quick operation.

The identifier sending unit 502 is configured for sending the target action identifier to the vehicle through the first wireless connection, so that the vehicle controls a target functional device equipped in the vehicle to perform a target action represented by the target action identifier.

Optionally, the identifier determining unit 501 is further configured for:
determining target operation information of the target quick operation; and
querying an action configuration table locally maintained by the quick-access function terminal for a target action identifier corresponding to the target operation information, the action configuration table being configured for recording a correspondence between operation information and an action identifier.

Optionally, the apparatus 500 further includes:
an identifier receiving unit 503, configured for receiving an action identifier corresponding to an in-vehicle infotainment function selected by a user, where the in-vehicle infotainment function is implemented by the vehicle by controlling a corresponding functional device to perform an action represented by the action identifier; and
an identifier configuration unit 504, configured for recording, in a configuration mode, in response to detecting a configuration operation performed on the manual operation component, a correspondence between operation information of the configuration operation and the received action identifier in the action configuration table.

Optionally, the identifier receiving unit 503 is further configured for:
receiving an action identifier from the vehicle through the first wireless connection; or
in a case where the quick-access function terminal establishes a second wireless connection with an electronic device independent of the vehicle, receiving an action identifier from the electronic device through the second wireless connection;
where an in-vehicle infotainment function corresponding to the received action identifier is selected by the user in an interactive interface provided by the vehicle or the electronic device.

Optionally, the identifier configuration unit 504 is further configured for:
determining, in response to detecting one target quick operation performed on the manual operation component, one target action identifier corresponding to the one target quick operation; or
determining, in response to detecting a plurality of consecutive target quick operations performed on the manual operation component, one target action identifier jointly corresponding to the plurality of consecutive target quick operations or target action identifiers respectively corresponding to the plurality of consecutive target quick operations.

Optionally,
the identifier determining unit 501 is further configured for determining a plurality of target action identifiers corresponding to the target quick operation and sequence information of the plurality of target action identifiers, where the plurality of target action identifiers respectively represent at least one target action; and
the identifier sending unit 502 is further configured for sending the plurality of target action identifiers and the sequence information to the vehicle, or sequentially sending the plurality of target action identifiers to the vehicle according to a sequence indicated by the sequence information, so that the vehicle sequentially controls, according to the sequence information, corresponding target functional devices to perform target actions respectively represented by the plurality of target action identifiers.

Optionally, the identifier determining unit 501 is further configured for:
sending a state information acquisition request to the vehicle through the first wireless connection;
receiving vehicle state information returned by the vehicle in response to the state information acquisition request, the vehicle state information being configured for representing a current operating state of the vehicle; and
determining a target action identifier corresponding to the target quick operation according to the vehicle state information.

Optionally, a plurality of quick-access function terminals are placed inside the vehicle, and the plurality of quick-access function terminals form a composite function terminal according to a preset sequence; and
the vehicle is configured for:
in response to receiving target action identifiers from the plurality of quick-access function terminals in the composite function terminal, respectively,
verifying whether the received target action identifiers are the same, and in response to the target action identifiers being the same, controlling a corresponding target functional device to perform the target action represented by the target action identifiers; or
verifying whether a sequence of receiving the target action identifiers is the preset sequence and whether an interval duration between receiving adjacent target action identifiers is not greater than a duration threshold, and in response to the sequence being the preset sequence and the interval duration being not greater than the duration threshold, controlling a corresponding target functional device to perform the target action represented by the target action identifiers.

Optionally, the apparatus 500 further includes:
a level determining unit 505, configured for determining operation level information of the target quick operation; and
sending the operation level information to the vehicle through the first wireless connection, so that the vehicle controls the target functional device to perform the target action according to an execution level indicated by the operation level information.

While the present disclosure contains many specific implementation details, these details should not be construed as limitations on the scope of any disclosure or of what may be claimed, but rather as descriptions of features specific to particular embodiments of the disclosure. Certain features that are described in this disclosure in the context of various embodiments can also be implemented in combination in a single embodiment. On the other hand, various features described in a single embodiment may also be implemented separately in multiple embodiments or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the appended claims. In some cases, the actions recited in the claims can be performed in a different order and still achieve desirable results. In addition, the processes depicted in the drawings do not necessarily require the particular order shown, or sequential order, to achieve desirable results. In certain implementations, multitasking and parallel processing may be advantageous.

The foregoing description sets forth merely exemplary embodiments of the present disclosure, and is not intended to limit the present disclosure. Any modifications, equivalent substitutions, improvements, etc. made within the spirit and principles of the present disclosure shall be encompassed within the scope of protection of the present disclosure.

## Claims

1. A method of controlling a vehicle, applied to a control module in a quick-access function terminal placed inside the vehicle and equipped with a manual operation component, wherein the quick-access function terminal establishes a first wireless connection with the vehicle, **characterized in that** the method comprises:
determining, in response to detecting a target quick operation performed on the manual operation component, a target action identifier corresponding to the target quick operation; and
sending the target action identifier to the vehicle through the first wireless connection, so that the vehicle controls a target functional device equipped in the vehicle to perform a target action represented by the target action identifier.

2. The method according to claim 1, wherein determining the target action identifier corresponding to the target quick operation comprises:
determining target operation information of the target quick operation; and
querying an action configuration table locally maintained by the quick-access function terminal for the target action identifier corresponding to the target operation information, the action configuration table being configured to record a correspondence between operation information and an action identifier.

3. The method according to claim 2, further comprising:
receiving an action identifier corresponding to an in-vehicle infotainment function selected by a user; and
in a configuration mode, in response to detecting a configuration operation performed on the manual operation component, recording, in the action configuration table, a correspondence between operation information of the configuration operation and the received action identifier.

4. The method according to claim 3, wherein receiving the action identifier corresponding to the in-vehicle infotainment function selected by the user comprises:
receiving the action identifier from the vehicle through the first wireless connection; or
in a case where the quick-access function terminal establishes a second wireless connection with an electronic device independent of the vehicle, receiving the action identifier from the electronic device through the second wireless connection,
wherein the in-vehicle infotainment function corresponding to the received action identifier is selected by the user in an interactive interface provided by the vehicle or the electronic device.

5. The method according to claim 1, wherein determining, in response to detecting the target quick operation performed on the manual operation component, the target action identifier corresponding to the target quick operation comprises:
determining, in response to detecting one target quick operation performed on the manual operation component, one target action identifier corresponding to the one target quick operation; or
determining, in response to detecting a plurality of consecutive target quick operations performed on the manual operation component, one target action identifier jointly corresponding to the plurality of consecutive target quick operations or target action identifiers respectively corresponding to the plurality of consecutive target quick operations.

6. The method according to claim 1, wherein
determining the target action identifier corresponding to the target quick operation comprises: determining a plurality of target action identifiers corresponding to the target quick operation and sequence information of the plurality of target action identifiers, wherein the plurality of target action identifiers respectively represent at least one target action; and
sending the target action identifier to the vehicle comprises: sending the plurality of target action identifiers and the sequence information to the vehicle, or sequentially sending the plurality of target action identifiers to the vehicle according to a sequence indicated by the sequence information, so that the vehicle sequentially controls, according to the sequence information, corresponding target functional devices to perform target actions respectively represented by the plurality of target action identifiers.

7. The method according to claim 1, wherein determining the target action identifier corresponding to the target quick operation comprises:
sending a state information acquisition request to the vehicle through the first wireless connection;
receiving vehicle state information returned by the vehicle in response to the state information acquisition request, the vehicle state information being configured to represent a current operating state of the vehicle; and
determining the target action identifier corresponding to the target quick operation according to the vehicle state information.

8. The method according to claim 1, wherein a plurality of quick-access function terminals are placed inside the vehicle, and the plurality of quick-access function terminals form a composite function terminal according to a preset sequence; and the vehicle is configured to:
in response to receiving target action identifiers from the plurality of quick-access function terminals in the composite function terminal, respectively,
verify whether the received target action identifiers are the same, and in response to the received target action identifiers being the same, controlling a corresponding target functional device to perform a target action represented by the target action identifiers; or
verify whether a sequence of receiving the target action identifiers is the preset sequence and whether an interval duration between receiving adjacent target action identifiers is not greater than a duration threshold, and in response to the sequence being the preset sequence and the interval duration being not greater than the duration threshold, controlling a corresponding target functional device to perform a target action represented by the target action identifiers.

9. The method according to claim 1, further comprising:
determining operation level information of the target quick operation; and
sending the operation level information to the vehicle through the first wireless connection, so that the vehicle controls the target functional device to perform the target action according to an execution level indicated by the operation level information.

10. A quick-access function terminal, comprising at least one control component, and at least one manual operation component, at least one communication component, and at least one power supply component that are connected to the control component, wherein
the manual operation component is configured to receive a target quick operation performed by a user;
in response to the quick-access function terminal being placed inside a vehicle, the communication component is configured to establish a first wireless connection with the vehicle;
the power supply component is configured to supply power to the control component, the manual operation component, and the communication component; and
the control component is configured to implement the method according to any one of claims 1 to 9.

11. The quick-access function terminal according to claim 10, wherein the manual operation component comprises at least one of a button, a knob, a lever, or a slider.

12. The quick-access function terminal according to claim 10, further comprising an information output component configured to output operation related information of the control component.

13. An apparatus for controlling a vehicle, applied to a quick-access function terminal placed inside the vehicle and equipped with a manual operation component, wherein the quick-access function terminal establishes a first wireless connection with the vehicle, **characterized in that** the apparatus comprises:
an identifier determining unit, configured to determine, in response to detecting a target quick operation performed on the manual operation component, a target action identifier corresponding to the target quick operation; and
an identifier sending unit, configured to send the target action identifier to the vehicle through the first wireless connection, so that the vehicle controls a target functional device equipped in the vehicle to perform a target action represented by the target action identifier.

14. A system for controlling a vehicle, **characterized by** comprising the vehicle and a quick-access function terminal placed inside the vehicle and establishing a first wireless connection with the vehicle, the quick-access function terminal comprising a manual operation component, wherein
the quick-access function terminal is configured to determine, in response to detecting a target quick operation performed on the manual operation component, a target action identifier corresponding to the target quick operation, and send the target action identifier to the vehicle through the first wireless connection; and
the vehicle is configured to control a corresponding target functional device to perform a target action represented by the target action identifier.

15. A vehicle, **characterized by** comprising a quick-access function terminal placed inside the vehicle, wherein the quick-access function terminal establishes a first wireless connection with the vehicle, and the quick-access function terminal is configured to implement the method according to any one of claims 1 to 9.
